(19) Europäisches Patentamt
European Patent Office
Office européen des brevets

(11) **EP 4 261 763 A1**

(12) **EUROPEAN PATENT APPLICATION**
published in accordance with Art. 153(4) EPC

(43) Date of publication:
**18.10.2023 Bulletin 2023/42**

(21) Application number: **22739574.6**

(22) Date of filing: **07.01.2022**

(51) International Patent Classification (IPC):
**G06Q 50/08** (2012.01)    **G06F 40/205** (2020.01)
**G06F 40/268** (2020.01)    **G06Q 50/00** (2012.01)
**G06Q 50/30** (2012.01)    **G06F 17/16** (2006.01)
**G06N 3/08** (2023.01)

(52) Cooperative Patent Classification (CPC):
**G06F 17/16; G06F 40/205; G06F 40/268;
G06N 3/08; G06Q 50/00; G06Q 50/08; G06Q 50/30**

(86) International application number:
**PCT/KR2022/000275**

(87) International publication number:
**WO 2022/154376 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.01.2021 KR 20210003731**

(71) Applicant: **Urbanbase Inc.**
**Seoul 06614 (KR)**

(72) Inventors:
• **BAEK, Yunah**
**Anyang-si Seoul 14070 (KR)**
• **YUN, Dae Hee**
**Seoul 02008 (KR)**

(74) Representative: **BCKIP Part mbB**
**Siegfriedstraße 8**
**80803 München (DE)**

(54) **APPARATUS AND METHOD FOR PROVIDING USER'S INTERIOR STYLE ANALYSIS MODEL ON BASIS OF SNS TEXT**

(57) A method for providing a style analysis model according to one embodiment of the present invention may comprise: obtaining a training document including text data written by a user and determining a first text included in the training document; determining a predetermined number of second texts from among the first text of the training document; generating a first feature vector configured on the basis of the number of times each second text is included in training documents written by each user; generating, for each class, a second feature vector on the basis of the number of times each style-specific text is included in all the obtained training documents; labeling the first feature vector with a class of a second feature vector that is most similar to the first feature vector; and generating and training a machine learning-based neural network model that derives a correlation between the first feature vector and the class labeled in the first feature vector.

*FIG.2*

EP 4 261 763 A1

## Description

[Technical Field]

The present disclosure relates to an apparatus and method for providing a user interior style analysis model based on an SNS text.

[Background]

People have a desire to pursue a more beautiful residential environment while conforming to their personalities as they live. To this end, the interior is simply decorated by arranging new objects in a residential space, or furthermore, interior construction such as replacing wallpaper or flooring and changing the structure of the space is carried out.

Conventionally, for interior construction, a client requests an interior expert to design an interior design for a residential environment to create a desired space, and the requested interior expert designs an interior desired by a customer and presents the design to the customer.

Unlike this, recently, as various interior information is disseminated through the Internet, people access Internet shopping mall sites and purchase interior accessories or DIY products they want to decorate their own space. Furthermore, as an interior service (e.g., 3D space data platform Urban Base) that allows a user to directly decorate various interior elements in a 3D virtual space has been developed, users of the interior service may directly transplant their living environment into a virtual space, arrange things according to their taste, and easily replace the flooring/wallpaper.

Accordingly, users may indirectly experience the real interior through the interior of the virtual space, and are provided with services such as ordering a real interior product that they like or placing an interior order related to actual construction.

[Detailed Description]

[Technical Problem]

An interior service has been developed in various forms such as a shopping mall service that provides product information to allow users to purchase interior products at a shopping mall, or a service of providing a 3D virtual space that allows users to directly arrange interior elements such as wallpaper, flooring, and objects in a desired form.

Since information on products provided by the above-described interior services exceeds hundreds of millions, providing convenience by preferentially recommending products of a style preferred by a user to the user has an important meaning in common in most interior services.

Accordingly, an embodiment of the present disclosure is to provide a technology of creating a neural network model that analyzes a user style based on text data written by the user on a social network service (SNS) and preferentially recommending a product that matches the style analyzed by the neural network model.

However, the technical objects to be achieved by the embodiments of the present disclosure are not limited to the above-mentioned objects, and various technical objects may be derived from the contents to be described below within the scope obvious to one of skill in the art.

[Technical Solution]

According to an embodiment of the present disclosure, a style analysis model providing apparatus includes one or more memories configured to store instructions to perform a predetermined operation, and one or more processors operatively connected to the one or more memories and configured to execute the instructions, wherein the operation performed by the processor includes acquiring a learning document including text data written by a plurality of users, determining a first text included in the learning document based on a preset unit in which meaning of a text constituting the learning document is maintained, determining a predetermined number of second texts from the first text of the learning document based on a number of words included in the learning document written by each user, generating a first feature vector configured for each user based on a frequency count including each second text among learning documents written by each user, generating a second feature vector based on a frequency count including each style specific text among all the acquired learning documents for each class by using pre-stored information about a plurality of classes specifying an interior style and a style specific text mapped to each class, determining a similarity between the first feature vector and the second feature vector and labeling the first feature vector with a class of the second feature vector most similar to the first feature vector, and generating and training a machine learning-based neural network model that derives a correlation between the first feature vector and the class labeled for the first feature vector.

The determining the first text may include extracting a special character and an emoticon included in the learning document using a regular expression and removing a number and a repeated string included in the learning document, removing a postposition, an article, and a non-sentence included in the learning document based on a pre-stored stopword dictionary, and determining the first text by extracting a stem unit included in the learning document based on a predetermined morpheme analysis algorithm.

The determining the second text may include determining a number of words to be used for learning based on statistics of a number of words for each learning document written by each user, and determining the second text selected by the determined number of words from the first text included in each learning document written by each user.

The determining the second text may include, when statistics are aggregated in an order of a largest number of words included in the learning document written by each user for all documents, determining a number of words at a point at which a top third quartile begins with a number of words included in the learning document from the statistics, as the predetermined number, and determining the second text corresponding to the predetermined number from the first text included in each learning document created by each user.

The generating the first feature vector may include generating a first feature vector including as an element a value calculated according to *tfidf(t,d,D)* of Equation 1 below based on a number of documents including each second text among learning documents written by the user, for each user,

[Equation 1]

$$tfidf(t,d,D) = tf(t,d) \times idf(t,D)$$

$$(tf(t,d) = \log(f(t,d)+1),$$

$$idf(t,D) = \log(\frac{|D|}{|\{d \in D : t \in d\}| + 1})$$

, d: learning document written by specific user, t: second text, D: all learning documents contained in document DB, |D|: number of all learning documents contained in document DB, *f(t, d)*: number of appearances of second text t in learning document d written by specific user, and | {d∈D:t∈d} | : number of learning documents including second text t among learning documents written by specific user).

The generating the first feature vector may include, after the first feature vector is generated, when a special character or an emotion is used adjacent between words of a predetermined unit from the second text in a learning document in which the second text is used, updating an element value of the first feature vector by applying a preset weight to the element value calculated for the predetermined second text.

The generating the second feature vector may include generating a second feature vector including a value calculated according to *tfidf(t,d,D)* of Equation 2 below as an element based on a number of documents including each style specific text among all the acquired learning document, for each class,

[Equation 2]

$$tfidf(t,d,D) = tf(t,d) \times idf(t,D)$$

$$(tf(t,d) = \log(f(t,d)+1),$$

$$idf(t,D) = \log(\frac{|D|}{|\{d \in D : t \in d\}| + 1})$$

, d: learning document written by specific user, t: style specific text, D: all learning documents contained in document DB, |D| : number of all learning documents contained in document DB, *f(t,d)*: number of appearances of style specific text t in learning document d written by specific user, and | {d∈D:t∈d} | : number of learning documents including style specific text t among learning documents written by specific user).

The labelling may include calculating a cosine similarity of the first feature vector and the second feature vector and labelling the first feature vector with a class of the second feature vector, a value of which is calculated for the first feature vector is closest to +1.

The generating and training the neural network model may include setting the first feature vector to be input to an input layer of a neural network designed based on a predetermined convolutional neural network (CNN), setting the class labeled for each first feature vector to be input to an output layer, and training a weight of a neural network that derives a correlation between the first feature vector and the class labeled for the first feature vector.

According to an embodiment of the present disclosure, a style analysis model providing method performed by a style analysis model providing apparatus includes acquiring a learning document including text data written by a plurality of users, determining a first text included in the learning document based on a preset unit in which meaning of a text constituting the learning document is maintained, determining a predetermined number of second texts from the first text of the learning document based on a number of words included in the learning document written by each user, generating a first feature vector configured for each user based on a frequency count including each second text among learning documents written by each user, generating a second feature vector based on a frequency count including each style specific text among all the acquired learning documents for each class by using pre-stored information about a plurality of classes specifying an interior style and a style specific text mapped to each class, determining a similarity between the first feature vector and the second feature vector and labeling the first feature vector with a class of the second feature vector most similar to the first feature vector, and generating and training a machine learning-based neural network model that derives a correlation between the first feature vector and the class labeled for the first feature vector.

[Advantageous Effect]

According to an embodiment of the present disclosure, a neural network model that derives a correlation between content of a text written by a user on a social network service (SNS) and an interior style preferred by the corresponding user may be generated, and a product corresponding to a style preferred by the user may be preferentially recommended using the neural network model in various interior services, thereby providing convenience to the user.

In addition, various effects to be directly or indirectly identified through this document may be provided.

[Brief Description of Drawings]

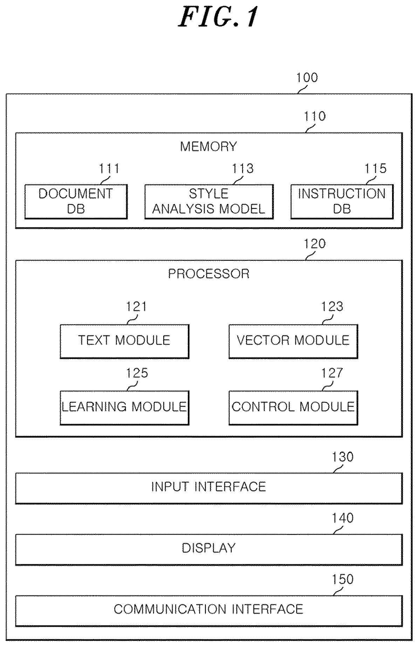

FIG. 1 is a functional block diagram of a style analysis model providing apparatus according to an embodiment of the present disclosure.

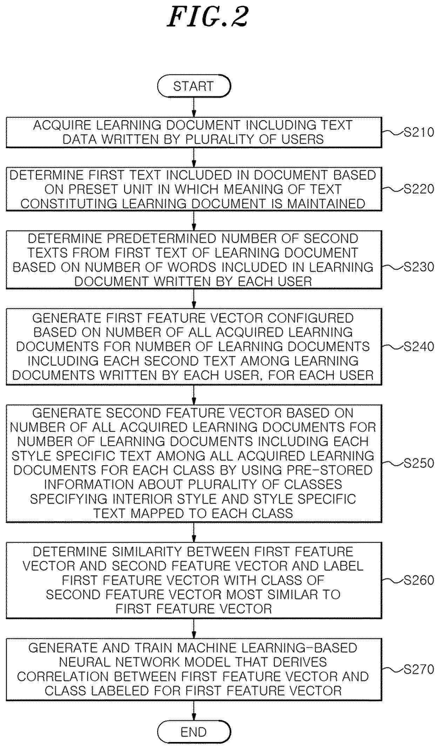

FIG. 2 is an operational flowchart of a method of providing a style analysis model in which a style analysis model providing apparatus generates a style analysis model according to an embodiment of the present disclosure.

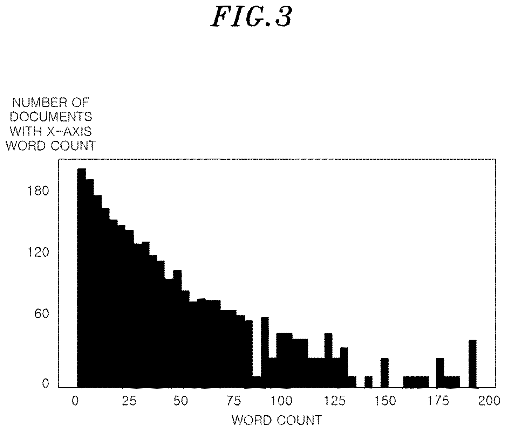

FIG. 3 shows an example of statistically counting the number of documents according to the number of words included in a document for the entire data when a text data set of all posts made by a specific user on a social network service (SNS) is expressed as a document according to an embodiment of the present disclosure.

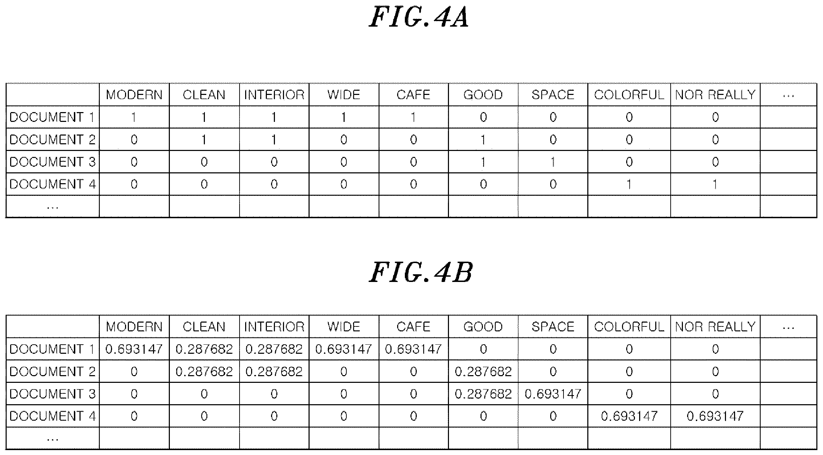

FIG. 4(a) is an exemplary diagram showing a frequency count of each second text included in all documents generated for each user according to an embodiment of the present disclosure, and FIG. 4(b) is an exemplary diagram showing an element value of a first feature vector calculated by applying an importance weight to the frequency of each second text for each user according to an embodiment of the present disclosure.

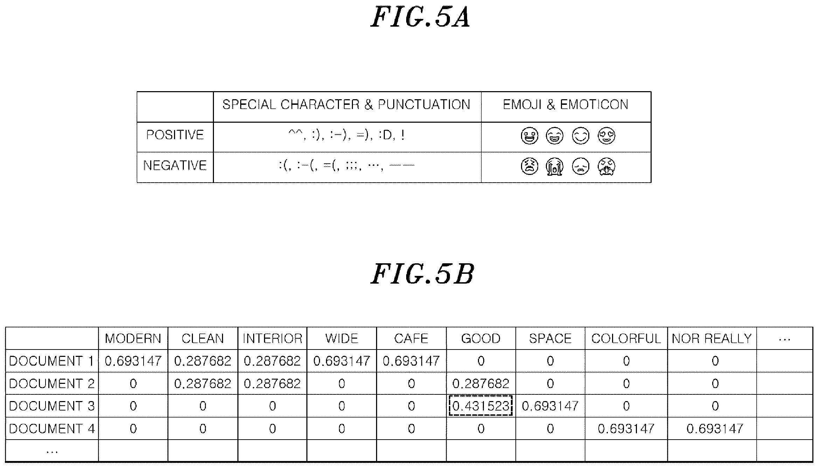

FIG. 5(a) shows an example of prestored information pre-stored with a special character/emoticon expressing positive and negative according to an embodiment of the present disclosure, and FIG. 5(b) shows an example in which a weight is applied to an element value of a first feature vector calculated from a second text adjacent to a special character/emoticon according to an embodiment of the present disclosure.

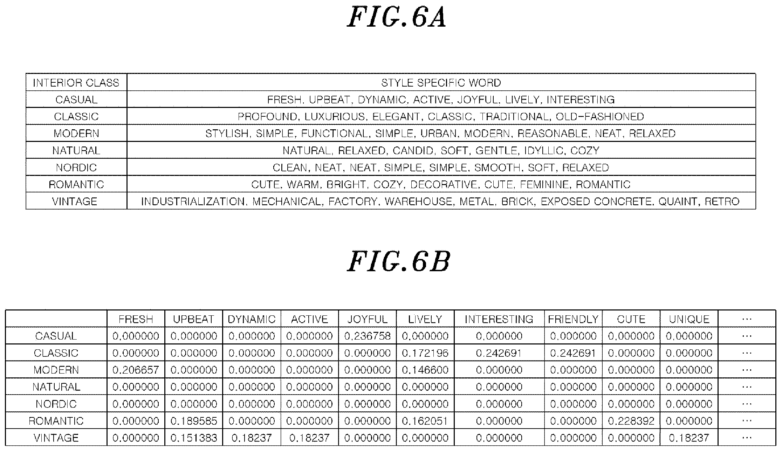

FIG. 6(a) shows an example of pre-stored information about a plurality of classes specifying an interior style and a style specific text mapped to each class according to an embodiment of the present disclosure and FIG. 6(b) shows an example of an element value of a second feature vector calculated from each style specific text for each class according to an embodiment of the present disclosure.

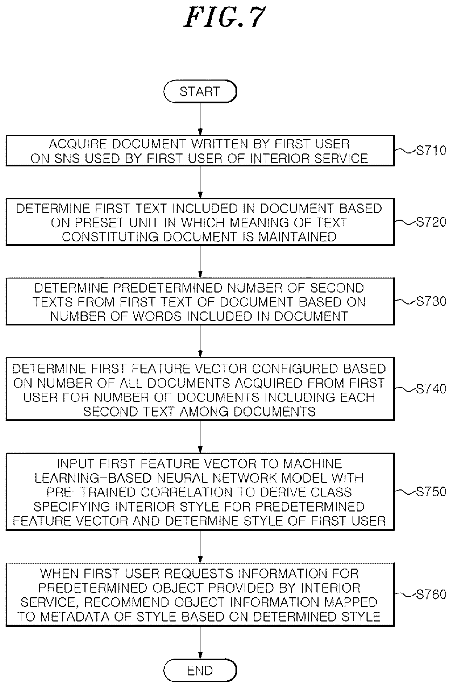

FIG. 7 is an operation flowchart of a method for providing a style analysis model in which a style analysis model providing apparatus recommends a product suitable for a user style using a style analysis model according to an embodiment of the present disclosure.

[Best Mode]

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. The terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and may be changed according to the intent or conventionally used methods of clients, operators, and users. Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

FIG. 1 is a functional block diagram of a style analysis model providing apparatus 100 according to an embodiment of the present disclosure. Referring to FIG. 1, the style analysis model providing apparatus 100 according to an embodiment may include a memory 110, a processor 120, an input interface 130, a display 140, and a communication interface 150.

The memory 110 may include a document DB 111, a style analysis model 113, and an instruction DB 115.

The document DB 111 may store a document for learning including text data. The document for learning may include text data posted on a social network service (SNS) in which a user creates a post by writing text, such as Instagram, Facebook, Twitter, blogs, and Kakao Page. The document DB 111 may obtain text data posted by the user on the SNS using a predetermined crawling algorithm or through an API provided by the SNS, according to a user agreement to collect SNS posting information. Accordingly, the text data may be stored as a document for learning to be used for learning a neural network model.

The document DB 111 may store text data grouped to the same unit as one document unit by specifying a division unit of text data such as one post or one comment. Accordingly, the document DB 111 may store text information uploaded to an SNS by a plurality of users in units of documents. For example, based on a specific user, a plurality of documents classified according to a time, type, and platform of text data uploaded to an SNS by a corresponding user may be stored in the document DB 111.

The style analysis model 113 is a neural network model that derives a correlation between text content written by a user on a SNS and an interior style preferred by the user. The style analysis model 113 may be learned and stored in the memory 110 according to an embodiment to be described later with reference to FIG. 2.

The instruction DB 115 may store instructions for executing an operation of the processor 120. For example, the instruction DB 115 may store a computer code for performing operations corresponding to operations of the processor 120 to be described later.

The processor 120 may control the overall operation of components included in the style analysis model providing apparatus 100, the memory 110, the input interface 130, the display 140, and the communication interface 150. The processor 120 may include a text module 121, a vector module 123, a learning module 125, and a control module 127. The processor 120 may execute the instructions stored in the memory 110 to drive the text module 121, the vector module 123, the learning module 125, and the control module 127. Operations performed by the text module 121, the vector module 123, the learning module 125, and the control module 127 may be understood by operations performed by the processor 120.

The text module 121 may determine a first text to be classified based on a predetermined unit in which the meaning of the text is maintained for a learning document stored in the document DB 111. The text module 121 may determine the number of words to be used for actual learning in the learning documents created by each user based on the statistics of the number of documents according to the number of words included in each learning document of the user and extract a second text corresponding to the determined number of words from the first text included in each document unit.

The vector module 123 may create a first feature vector that specifies information of the second text extracted from each user, stored in the document DB 111, as a mathematical expression. The vector module 123 may generate a second feature vector that specifies information on a plurality of interior styles as a mathematical expression. The vector module 123 may label an interior style specified by the second feature vector having a high similarity to the first feature vector with a style class preferred by the corresponding user through a predetermined algorithm for analyzing the similarity between the first feature vector and the second feature vector.

The learning module 125 may set the first feature vector to be input to an input layer of a model designed based on a predetermined deep learning algorithm, set the interior style class labeled for the first feature vector to be input to an output layer, and train a weight of the neural network to derive a correlation between the first feature vector representing the feature of the document written by the user and the class labeled for the user. Upon completion of the learning, when a first feature vector generated from an SNS document of a new user is input to the style analysis model 113, the style analysis model 113 may determine an interior style of the corresponding user.

The control module 127 may control the vector module 123 to create a first feature vector by obtaining a document written by a first user, a new user of the interior service, in the style analysis model 113 in which learning is completed and specify an interior style preferred by the first user by inputting the first feature vector generated from the first user to the style analysis model 113. The control module 127 may map the style specified for the first user by the style analysis model 113 to first user information and store the information in the memory 110 or an external DB server. Then, when the interior service used by the first user requests information on a specific object, the control module 127 may preferentially recommend object information to which meta data corresponding to the style mapped for the first user is mapped, to the first user.

The input interface 130 may receive user input. For example, the user may receive input such as object information requested by the interior service.

The display 140 may include a hardware component that includes a display panel to output an image.

The communication interface 150 may communicate with an external device (e.g., external DB server or user terminal) to transmit and receive information. To this end, the communication interface 150 may include a wireless communication module or a wired communication module.

Hereinafter, with reference to FIGS. 2 to 7, a detailed embodiment in which components of the style analysis model providing apparatus 100 are operatively associated to train the style analysis model 113 and the style analysis model 113 that completes learning is used in an interior service will be described.

FIG. 2 is an operational flowchart of a method of providing a style analysis model in which the style analysis model providing apparatus 100 generates the style analysis model 113 according to an embodiment of the present disclosure. Each step of the method of providing a style analysis model according to FIG. 2 may be performed by the components of the style analysis model providing apparatus 100 described with reference to FIG. 1, and each step will be described as follows.

The document DB 110 may acquire and store a learning document including text data written by a plurality of users and load information on a learning document according to a call (S210).

The text module 121 may determine the first text classified based on a preset unit in which the meaning of the text constituting the learning document stored in the document DB 110 is maintained (S220).

For example, the text module 121 uses a regular expression for extracting a set of strings with a specific rule to classify a special character and an emoticon included in a text of a learning document (e.g., FIG. 5 (a)) and remove numbers and repeated strings (e.g., hahaha or hohoho).

Based on a stopword dictionary in which information on letters or strings (e.g., postposition, article, or non-sentence) that do not affect the overall meaning of the document is prestored, the text module 121 may remove the same text as a text stored in the stopword dictionary from the learning document.

Then, the text module 121 may separate a text based on a morpheme, which is the minimum unit that maintains meaning, and determine the morpheme of a pre-specified part of speech as the first text. For example, the text module 121 may separate a morpheme of a text using a KoNLPy morpheme analyzer, which is an opensource library, identify a part of speech of the morpheme, tag the identified morpheme with the part of speech, and determine a morpheme unit corresponding to stem as the first text.

Since post writing habits are different for respective users, the range of the number of words used in the learning document stored in the document DB 111 may vary depending on which user wrote the post. Therefore, when the number of words is extracted on a uniform basis for all learning documents and used for learning, information extracted for documents with relatively few words contains many null values, which may operate as data that hinders improvement in the performance of a neural network model.

Accordingly, in order to generate learning data for improving the performance of the neural network model, based on the number of words included in a learning document written by each user stored in the document DB 111, the text module 121 may determine a predetermined number of second texts from the first text of the learning document (S230). For example, the text module 121 may determine the number of words to be used for learning based on the statistics of the number of words for each learning document written by each user and determine second texts as many as the determined number of words of the first text included in each learning document written by a specific user.

FIG. 3 shows an example of statistically counting the number of documents according to the number of words included in a document for the entire data when a text data set of all posts made by a specific user on a SNS is expressed as a document according to an embodiment of the present disclosure.

Referring to FIG. 3, a maximum value of the number of words in all documents used in the example is 194, a minimum value of the number of words in the document is 1, an average value of the number of words in the document is 12.74, a standard deviation of the number of words in the document is 16.88, a median number of word in the document is 7.0, the top first quartile of the number of words in the document is 3.0, and the top third quartile of the number of words in the document is 16.0. That is, in the example of FIG. 3, most documents are distributed with the number of words less than 25, the maximum value is 194, and the minimum value is 1, and thus there may be a large difference in the number of words in the document.

Accordingly, the text module 121 may determine words to be used for learning in a learning document of a specific user, based on the number of words of a learning document, the words of which begins to correspond to the top third quartile, in an order of documents with the highest number of words for all learning documents. For example, in the example of FIG. 3, the number of the words of a document begins to correspond to the top third quartile is 16. In this case, the text module 121 may determine 16 second texts from the first text included in each document for all documents.

FIG. 4(a) is an exemplary diagram showing a frequency count of each second text included in all documents generated for each user according to an embodiment of the present disclosure, and FIG. 4(b) is an exemplary diagram showing an element value of a first feature vector calculated by applying an importance weight to the frequency of each second text for each user according to an embodiment of the present disclosure.

Referring to FIG. 4 (a), the top row of FIG. 4 (a) means second texts selected from all learning documents to be used for learning, a left column of FIG. 4(a) means learning documents of all respective users to be used for learning, and element values of FIG. 4(a) mean frequency counts in which the second texts of the top row among the all documents written by a specific user are used.

The vector module 123 may use the first feature vector, an element value of which is a frequency count at which the second text is used, as shown in FIG. 4(a), or may generate and use the first feature vector for learning, as shown in FIG. 4(b), by applying an importance weight for a second text through mathematical calculation from a frequency count of each second text for each user (S240).

Referring to FIG. 4(b), the vector module 123 may generate a first feature vector including a value of *tfidf(t,d,D)* calculated according to Equation 1 as an element based on a frequency count of each second text of a learning document written by each user, for each user.

[Equation 1]

$$tfidf(t,d,D) = tf(t,d) \times idf(t,D)$$

(*tf(t,d)* = log(*f(t,d)*+1),

$$idf(t,D) = \log(\frac{|D|}{|\{d \in D : t \in d\}| + 1})$$

, d: learning document written by specific user, t: second text, D: all learning documents contained in document DB, |D| : number of all learning documents contained in document DB, *f(t,d)*: number of appearances of second text t in learning document d written by specific user, and | {*d∈D:t∈d*} | : number of learning documents including second text t among learning documents written by specific user)

The vector module 123 may update an element value by applying a weight to the element value of the first feature vector calculated according to Equation 1 above according to whether the second text used in the corresponding element value is adjacent to a special character/emoticon.

FIG. 5(a) shows an example of prestored information pre-stored with a special character/emoticon expressing positive and negative according to an embodiment of the present disclosure, and FIG. 5(b) shows an example in which a weight is applied to an element value of a first feature vector calculated from a second text adjacent to a special character/emoticon according to an embodiment of the present disclosure.

Referring to FIG. 5(a), a special character/emoticon included in a text of a learning document may be determined according to an operation in which the text module 121 uses regular expression. In this case, the special character/emoticon may be classified as an element that strengthens the meaning of positive or negative for a specific text, as shown in FIG. 5(a).

Accordingly, in a learning document in which a second text used to calculate the element value of the first feature vector is used, when a special character or an emotion is used adjacent between words of a predetermined unit from the corresponding second text, the vector module 123 may update the element value of the first feature vector by applying a preset weight to the element value of the first feature vector calculated for the second text. For example, when the element value is used adjacent to a special character/emoticon classified as the meaning of positive, the element value may be updated by multiplying the element value calculated according to Equation 1 by a weight of 1 or more, and when element value is used adjacent to a special character/emoticon classified as the meaning of negative, the element value may be updated by multiplying the element value calculated according to Equation 1 by a weight of 1 or less.

In order to label a class of a style that the first feature vector generated according to the above process means, the vector module 123 may generate a second feature vector that specifies information about multiple interior styles as a mathematical expression (S250).

FIG. 6(a) shows an example of pre-stored information about a plurality of classes specifying an interior style and a style specific text mapped to each class according to an embodiment of the present disclosure and FIG. 6(b) shows an example of an element value of a second feature vector calculated from each style specific text for each class according to an embodiment of the present disclosure.

Referring FIGS. 6(a) and 6(b), the vector module 123 may extract a style specific word previously mapped for each interior class that specifies a type of style from all learning documents included in the document DB 111. Accordingly, as shown in FIG. 6(b), the vector module 123 may generate a second feature vector including the value calculated according to *tfidf(t,d,D)* of Equation 2 below as an element based on a frequency count including each style specific text among all learning documents for each interior class to be used in labelling of the first feature vector.

[Equation 2]

$$tfidf(t,d,D) = tf(t,d) \times idf(t,D)$$

(*tf(t,d)* = log(*f(t,d)*+1),

$$idf(t,D) = \log(\frac{|D|}{|\{d \in D : t \in d\}| + 1})$$

, d: learning document written by specific user, t: style specific text, D: all learning documents contained in document DB, |D| : number of all learning documents contained in document DB, *f(t,d)*: number of appearances of style specific text t in learning document d written by specific user, and | {*d∈D:t∈d*} | : number of learning documents including style specific text t among learning documents written by specific user)

The vector module 123 may determine a similarity between a first feature vector derived for each user and a second feature vector derived for each interior class and label the first feature vector of the user with a class of the second feature vector that is the most similar to the first feature vector of each user (S260). For example, the vector module 123 may calculate a cosine similarity of a first feature vector and a second feature vector and label the first feature vector with a class of the second feature vector, a value of which is calculated for the first feature vector is closest to +1.

The learning module 125 may generate and train a machine learning-based neural network model that derives a correlation between the first feature vector and the class labeled for the first feature vector (S270). For example, the learning module 125 may set the first feature vector to be input to an input layer of a neural network designed based on a predetermined convolutional neural network (CNN), set the class labeled for each first feature vector to be input to an output layer, and train a weight of a neural network that derives the correlation between the first feature vector and the class labeled for the first feature vector.

In addition, the learning module 125 may define various problems in a field of artificial intelligence and perform learning through an artificial intelligence neural network model designed according to a machine learning algorithm for resolving the problems, for example, algorithms of ResNet, LeNet-5, AlexNet, VGG-F, VGG-M, VGG-S, VGG-16, VGG-19, GoogLeNet (inception v1), or SENet, and examples of the algorithms to be used are not limited to the above-mentioned types.

The artificial intelligence model may refer to an overall model that includes nodes defining a network through synapse combinations and has problem solving capabilities. The artificial intelligence model may be defined by a learning process that updates a model parameter that is a weight between layers constituting the model, and an activation function that generates an output value. The model parameter refers to a parameter determined through learning, and include a weight of layer connection and a bias of a neuron. A hyperparameter means a parameter that needs to be set before learning in a machine learning algorithm and includes the number of network layers (num_layer), the number of learning data (num_training_samples), the number of classes (num_classes), a learning rate (learning rate), the number of learning times (epochs), mini batch size (mini_batch_size), and a loss function (optimizer). Setting values of the hyperparameters may vary depending on a learning design, and are not limited to a specific value.

An objective of the artificial intelligence model learning may be seen as determining a model parameter that minimizes a loss function. The loss function may be used as an indicator for determining an optimal model parameter in a learning process of the artificial intelligence model.

The style analysis model 113 completing learning may be stored in the memory 110. The style analysis model 113 stored in the memory 110 may be used according to wired/wireless communication connection of other object devices or may be distributed to other object devices. Accordingly, other object devices may utilize the style analysis model 113 for various interior services as in the embodiment of FIG. 7.

FIG. 7 is an operational flowchart of a method for providing a style analysis model in which the style analysis model providing apparatus 100 recommends a product suitable for a user style using the style analysis model 113 according to an embodiment of the present disclosure. Each step of the method for providing a style analysis model of FIG. 7 may be performed by components of the style analysis model providing apparatus 100 described with reference to FIG. 1. However, the style analysis model providing method of FIG. 7 may not necessarily need to be performed in the same device as the style analysis providing method of FIG. 2, and a device performing the operation of FIG. 2 and a device performing the operation of FIG. 7 may be different object devices. For example, the style analysis model providing apparatus 100 that performs the style analysis model providing method of FIG. 7 may be a computer server providing an interior service through the Internet, a user terminal receiving an interior service through the Internet, or a computing device that stores the style analysis model 113 generated by a separate device and provides or receives an interior service using the style analysis model 113. Accordingly, in the specification, the style analysis model providing apparatus 100 may include a "server" providing an interior service or a "user terminal" participating in the interior service.

Each step of the method for providing a style analysis model of FIG. 7 will be described as follows.

Referring to FIG. 7, the memory 110 may acquire and store a document written by a first user of an interior service on an SNS used by the first user (S710). The "first user" means a user from a point of view of using the style analysis model 113. The documents written by the first user may include text data posted on a social network service (SNS) in which a user creates a post by writing a text, such as Instagram, Facebook, Twitter, blogs, and Kakao Page. The document DB 111 may obtain text data posted by the user to the SNS by using a predetermined crawling algorithm or through an API provided by the SNS, according to an agreement of the first user to collect SNS post information.

The text module 121 may determine a first text included in the document based on a preset unit in which the meaning of the text constituting the document of the first user is maintained (S720). The text module 121 may determine a predetermined number of second texts from the first text of each document written by the first user based on the number of words included in the document written by the first user (S730). At this time, operations of steps S720 and S730 may be performed in the same manner as the operations described in steps S220 and S230 of FIG. 2, and repeated descriptions will be omitted.

The vector module 123 may generate a first feature vector configured based on an importance weight for second text in a frequency count including each second text from the document of the first user (5740). For example, the vector module 123 may generate a first feature vector including a value calculated according to *tfidf(t,d,D)* of Equation 3 below as an element based on the number of documents including each second text among all documents written by the first user.

[Equation 3]

$$tfidf(t,d,D) = tf(t,d) \times idf(t,D)$$

$tf(t,d) = \log(f(t,d)+1)$,

$idf(t,D) = \log(\frac{|D|}{|\{d \in D:t \in d\}|+1})$, d: document written by specific user, t: second text, D: all learning document used in learning of style analysis model, |D| : number of all learning documents used in learning of style analysis model and stored as preset value, *f(t,d)*: number of appearances of second text t in document d written by specific user, | {d∈D:t∈d} | : number of documents including second text t among documents written by specific user)

The control module 127 may input the first feature vector to the style analysis model 113 stored in the memory 110 to determine a class of a style of the first user and may map and store a class of the determined style to information of the first user (S750).

When the first user requests information on a predetermined object provided by the interior service, the control module 127 may recommend object information to which meta data of the style is mapped based on the determined style. The interior service may include a shopping mall service that sells interior goods through the Internet or an Internet virtual space providing service that arranges interior elements in a 3D virtual space. When the first user inputs a keyword of a predetermined product in the shopping mall service, the control module 127 may preferentially output product information mapped with meta data of a style mapped to the first user among product information mapped to the keyword. When the first user requests information on any one interior element among wallpaper, flooring, and objects in an Internet virtual space service, the control module 127 may preferentially output an interior element of a style mapped to the first user among the requested interior elements.

According to the above-described embodiment, a neural network model that derives a correlation between content of a text written by a user on an SNS and an interior style preferred by the corresponding user may be generated, and a product corresponding to a style preferred by the user may be preferentially recommended using the neural network model in various interior services, thereby providing convenience to the user.

The embodiments of the present disclosure may be achieved by various elements, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, and the like.

In a firmware or software configuration, an embodiment of the present disclosure may be implemented in the form of a module, a procedure, a function, or the like. Software code may be stored in a memory unit and executed by a processor. The memory unit is located at the interior or exterior of the processor and may transmit and receive data to and from the processor via various known elements.

Combinations of blocks in the block diagram attached to the present disclosure and combinations of operations in the flowchart attached to the present disclosure may be performed by computer program instructions. These computer program instructions may be installed in an encoding processor of a general-purpose computer, a special purpose computer, or other programmable data processing equipment, and thus the instructions executed by an encoding processor of a computer or other programmable data processing equipment may create an element for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing an instruction element for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1. A style analysis model providing apparatus comprising:

    one or more memories configured to store instructions to perform a predetermined operation; and
    one or more processors operatively connected to the one or more memories and configured to execute the instructions,
    wherein the operation performed by the processor includes:

        acquiring a learning document including text data written by a plurality of users;
        determining a first text included in the learning document based on a preset unit in which meaning of a text constituting the learning document is maintained;
        determining a predetermined number of second texts from the first text of the learning document based on a number of words included in the learning document written by each user;
        generating a first feature vector configured for each user based on a frequency count including each second text among learning documents written by each user;
        generating a second feature vector based on a frequency count including each style specific text among all the acquired learning documents for each class by using pre-stored information about a plurality of classes specifying an interior style and a style specific text mapped to each class;
        determining a similarity between the first feature vector and the second feature vector and labeling the first feature vector with a class of the second feature vector most similar to the first feature vector; and
        generating and training a machine learning-based neural network model that derives a correlation between the first feature vector and the class labeled for the first feature vector.

2. The style analysis model providing apparatus of claim 1, wherein the determining the first text includes:

    extracting a special character and an emoticon included in the learning document using a regular expression and removing a number and a repeated string included in the learning document;
    removing a postposition, an article, and a non-sentence included in the learning document based on a pre-stored stopword dictionary; and
    determining the first text by extracting a stem unit included in the learning document based on a predetermined morpheme analysis algorithm.

3. The style analysis model providing apparatus of claim 1, wherein the determining the second text includes determining a number of words to be used for learning based on statistics of a number of words for each learning document written by each user, and determining the second text selected by the determined number of words from the first text included in each learning document written by each user.

4. The style analysis model providing apparatus of claim 3, wherein the determining the second text includes:

    when statistics are aggregated in an order of a largest number of words included in the learning document written by each user for all documents, determining a number of words at a point at which a top third quartile begins with a number of words included in the learning document from the statistics, as the predetermined number; and
    determining the second text corresponding to the predetermined number from the first text included in each learning document created by each user.

5. The style analysis model providing apparatus of claim 1, wherein the generating the first feature vector includes generating a first feature vector including as an element a value calculated according to $tfidf(t, d, D)$ of Equation 1 below based on a number of documents including each second text among learning documents written by the user, for each user:

[Equation 1]

$$tfidf(t,d,D) = tf(t,d) \times idf(t,D)$$

$(tf(t,d) = log(f(t,d)+1),$

$idf(t,D) = \log(\frac{|D|}{|\{d \in D : t \in d\}| + 1})$ , d: learning document written by specific user, t: second text, D:

all learning documents contained in document DB, $|D|$ : number of all learning documents contained in document DB, $f(t,d)$: number of appearances of second text t in learning document d written by specific user, and $|\{d{\in}D{:}t{\in}d\}|$ : number of learning documents including second text t among learning documents written by specific user).

6. The style analysis model providing apparatus of claim 5, wherein the generating the first feature vector includes: after the first feature vector is generated, when a special character or an emotion is used adjacent between words of a predetermined unit from the second text in a learning document in which the second text is used, updating an element value of the first feature vector by applying a preset weight to the element value calculated for the predetermined second text.

7. The style analysis model providing apparatus of claim 1, wherein the generating the second feature vector includes generating a second feature vector including a value calculated according to $tfidf(t,d,D)$ of Equation 2 below as an element based on a number of documents including each style specific text among all the acquired learning document, for each class:

[Equation 2]

$$tfidf(t,d,D) = tf(t,d) \times idf(t,D)$$

$(tf(t,d) = \log(f(t,d){+}1)$, $idf(t,D) = \log\left(\dfrac{|D|}{|\{d{\in}D{:}t{\in}d\}|+1}\right)$ , d: learning document written by specific user, t: style specific text, D: all learning documents contained in document DB, $|D|$ : number of all learning documents contained in document DB, $f(t,d)$: number of appearances of style specific text t in learning document d written by specific user, and $|\{d{\in}D{:}t{\in}d\}|$ : number of learning documents including style specific text t among learning documents written by specific user).

8. The style analysis model providing apparatus of claim 1, wherein the labelling includes calculating a cosine similarity of the first feature vector and the second feature vector and labelling the first feature vector with a class of the second feature vector, a value of which is calculated for the first feature vector is closest to +1.

9. The style analysis model providing apparatus of claim 1, wherein the generating and training the neural network model includes setting the first feature vector to be input to an input layer of a neural network designed based on a predetermined convolutional neural network (CNN), setting the class labeled for each first feature vector to be input to an output layer, and training a weight of a neural network that derives a correlation between the first feature vector and the class labeled for the first feature vector.

10. A style analysis model providing method performed by a style analysis model providing apparatus, the method comprising:

acquiring a learning document including text data written by a plurality of users;
determining a first text included in the learning document based on a preset unit in which meaning of a text constituting the learning document is maintained;
determining a predetermined number of second texts from the first text of the learning document based on a number of words included in the learning document written by each user;
generating a first feature vector configured for each user based on a frequency count including each second text among learning documents written by each user;
generating a second feature vector based on a frequency count including each style specific text among all the acquired learning documents for each class by using pre-stored information about a plurality of classes specifying an interior style and a style specific text mapped to each class;
determining a similarity between the first feature vector and the second feature vector and labeling the first feature vector with a class of the second feature vector most similar to the first feature vector; and
generating and training a machine learning-based neural network model that derives a correlation between the first feature vector and the class labeled for the first feature vector.

11. A computer-readable recording medium having recorded thereon a computer program including an instruction that causes a processor to perform the method of claim 10.

## FIG.1

100

110

### MEMORY

| 111 | 113 | 115 |
|---|---|---|
| DOCUMENT DB | STYLE ANALYSIS MODEL | INSTRUCTION DB |

120

### PROCESSOR

| 121 | 123 |
|---|---|
| TEXT MODULE | VECTOR MODULE |

| 125 | 127 |
|---|---|
| LEARNING MODULE | CONTROL MODULE |

130

INPUT INTERFACE

140

DISPLAY

150

COMMUNICATION INTERFACE

EP 4 261 763 A1

*FIG.2*

START

ACQUIRE LEARNING DOCUMENT INCLUDING TEXT DATA WRITTEN BY PLURALITY OF USERS ～S210

DETERMINE FIRST TEXT INCLUDED IN DOCUMENT BASED ON PRESET UNIT IN WHICH MEANING OF TEXT CONSTITUTING LEARNING DOCUMENT IS MAINTAINED ～S220

DETERMINE PREDETERMINED NUMBER OF SECOND TEXTS FROM FIRST TEXT OF LEARNING DOCUMENT BASED ON NUMBER OF WORDS INCLUDED IN LEARNING DOCUMENT WRITTEN BY EACH USER ～S230

GENERATE FIRST FEATURE VECTOR CONFIGURED BASED ON NUMBER OF ALL ACQUIRED LEARNING DOCUMENTS FOR NUMBER OF LEARNING DOCUMENTS INCLUDING EACH SECOND TEXT AMONG LEARNING DOCUMENTS WRITTEN BY EACH USER, FOR EACH USER ～S240

GENERATE SECOND FEATURE VECTOR BASED ON NUMBER OF ALL ACQUIRED LEARNING DOCUMENTS FOR NUMBER OF LEARNING DOCUMENTS INCLUDING EACH STYLE SPECIFIC TEXT AMONG ALL ACQUIRED LEARNING DOCUMENTS FOR EACH CLASS BY USING PRE-STORED INFORMATION ABOUT PLURALITY OF CLASSES SPECIFYING INTERIOR STYLE AND STYLE SPECIFIC TEXT MAPPED TO EACH CLASS ～S250

DETERMINE SIMILARITY BETWEEN FIRST FEATURE VECTOR AND SECOND FEATURE VECTOR AND LABEL FIRST FEATURE VECTOR WITH CLASS OF SECOND FEATURE VECTOR MOST SIMILAR TO FIRST FEATURE VECTOR ～S260

GENERATE AND TRAIN MACHINE LEARNING-BASED NEURAL NETWORK MODEL THAT DERIVES CORRELATION BETWEEN FIRST FEATURE VECTOR AND CLASS LABELED FOR FIRST FEATURE VECTOR ～S270

END

13

# FIG.3

NUMBER OF
DOCUMENTS
WITH X-AXIS
WORD COUNT

WORD COUNT

## FIG.4A

| | MODERN | CLEAN | INTERIOR | WIDE | CAFE | GOOD | SPACE | COLORFUL | NOR REALLY | ... |
|---|---|---|---|---|---|---|---|---|---|---|
| DOCUMENT 1 | 1 | 1 | 1 | 1 | 1 | 0 | 0 | 0 | 0 | |
| DOCUMENT 2 | 0 | 1 | 1 | 0 | 0 | 1 | 0 | 0 | 0 | |
| DOCUMENT 3 | 0 | 0 | 0 | 0 | 0 | 1 | 1 | 0 | 0 | |
| DOCUMENT 4 | 0 | 0 | 0 | 0 | 0 | 0 | 0 | 1 | 1 | |
| ... | | | | | | | | | | |

## FIG.4B

| | MODERN | CLEAN | INTERIOR | WIDE | CAFE | GOOD | SPACE | COLORFUL | NOR REALLY | ... |
|---|---|---|---|---|---|---|---|---|---|---|
| DOCUMENT 1 | 0.693147 | 0.287682 | 0.287682 | 0.693147 | 0.693147 | 0 | 0 | 0 | 0 | |
| DOCUMENT 2 | 0 | 0.287682 | 0.287682 | 0 | 0 | 0.287682 | 0 | 0 | 0 | |
| DOCUMENT 3 | 0 | 0 | 0 | 0 | 0 | 0.287682 | 0.693147 | 0 | 0 | |
| DOCUMENT 4 | 0 | 0 | 0 | 0 | 0 | 0 | 0 | 0.693147 | 0.693147 | |
| ... | | | | | | | | | | |

## FIG.5A

|  | SPECIAL CHARACTER & PUNCTUATION | EMOJI & EMOTICON |
|---|---|---|
| POSITIVE | ^^, :), :-), =), :D, ! | 😃 😄 😊 😍 |
| NEGATIVE | :(, :-(, =(, ;;;, ..., —— | 😧 😭 😔 😱 |

## FIG.5B

|  | MODERN | CLEAN | INTERIOR | WIDE | CAFE | GOOD | SPACE | COLORFUL | NOR REALLY | ... |
|---|---|---|---|---|---|---|---|---|---|---|
| DOCUMENT 1 | 0.693147 | 0.287682 | 0.287682 | 0.693147 | 0.693147 | 0 | 0 | 0 | 0 |  |
| DOCUMENT 2 | 0 | 0.287682 | 0.287682 | 0 | 0 | 0.287682 | 0 | 0 | 0 |  |
| DOCUMENT 3 | 0 | 0 | 0 | 0 | 0 | 0.431523 | 0.693147 | 0 | 0 |  |
| DOCUMENT 4 | 0 | 0 | 0 | 0 | 0 | 0 | 0 | 0.693147 | 0.693147 |  |
| ... |  |  |  |  |  |  |  |  |  |  |

## FIG.6A

| INTERIOR CLASS | STYLE SPECIFIC WORD |
|---|---|
| CASUAL | FRESH, UPBEAT, DYNAMIC, ACTIVE, JOYFUL, LIVELY, INTERESTING |
| CLASSIC | PROFOUND, LUXURIOUS, ELEGANT, CLASSIC, TRADITIONAL, OLD-FASHIONED |
| MODERN | STYLISH, SIMPLE, FUNCTIONAL, SIMPLE, URBAN, MODERN, REASONABLE, NEAT, RELAXED |
| NATURAL | NATURAL, RELAXED, CANDID, SOFT, GENTLE, IDYLLIC, COZY |
| NORDIC | CLEAN, NEAT, NEAT, SIMPLE, SIMPLE, SMOOTH, SOFT, RELAXED |
| ROMANTIC | CUTE, WARM, BRIGHT, COZY, DECORATIVE, CUTE, FEMININE, ROMANTIC |
| VINTAGE | INDUSTRIALIZATION, MECHANICAL, FACTORY, WAREHOUSE, METAL, BRICK, EXPOSED CONCRETE, QUAINT, RETRO |

## FIG.6B

|  | FRESH | UPBEAT | DYNAMIC | ACTIVE | JOYFUL | LIVELY | INTERESTING | FRIENDLY | CUTE | UNIQUE | ... |
|---|---|---|---|---|---|---|---|---|---|---|---|
| CASUAL | 0.000000 | 0.000000 | 0.000000 | 0.000000 | 0.236758 | 0.000000 | 0.000000 | 0.000000 | 0.000000 | 0.000000 | ... |
| CLASSIC | 0.000000 | 0.000000 | 0.000000 | 0.000000 | 0.000000 | 0.172196 | 0.242691 | 0.242691 | 0.000000 | 0.000000 | ... |
| MODERN | 0.206657 | 0.000000 | 0.000000 | 0.000000 | 0.000000 | 0.146600 | 0.000000 | 0.000000 | 0.000000 | 0.000000 | ... |
| NATURAL | 0.000000 | 0.000000 | 0.000000 | 0.000000 | 0.000000 | 0.000000 | 0.000000 | 0.000000 | 0.000000 | 0.000000 | ... |
| NORDIC | 0.000000 | 0.000000 | 0.000000 | 0.000000 | 0.000000 | 0.000000 | 0.000000 | 0.000000 | 0.000000 | 0.000000 | ... |
| ROMANTIC | 0.000000 | 0.189585 | 0.000000 | 0.000000 | 0.000000 | 0.162051 | 0.000000 | 0.000000 | 0.228392 | 0.000000 | ... |
| VINTAGE | 0.000000 | 0.151383 | 0.18237 | 0.18237 | 0.000000 | 0.000000 | 0.000000 | 0.000000 | 0.000000 | 0.18237 | ... |

EP 4 261 763 A1

# FIG.7

START

ACQUIRE DOCUMENT WRITTEN BY FIRST USER
ON SNS USED BY FIRST USER OF INTERIOR SERVICE — S710

DETERMINE FIRST TEXT INCLUDED IN DOCUMENT BASED
ON PRESET UNIT IN WHICH MEANING OF TEXT
CONSTITUTING DOCUMENT IS MAINTAINED — S720

DETERMINE PREDETERMINED NUMBER OF SECOND
TEXTS FROM FIRST TEXT OF DOCUMENT BASED ON
NUMBER OF WORDS INCLUDED IN DOCUMENT — S730

DETERMINE FIRST FEATURE VECTOR CONFIGURED BASED
ON NUMBER OF ALL DOCUMENTS ACQUIRED FROM FIRST
USER FOR NUMBER OF DOCUMENTS INCLUDING EACH
SECOND TEXT AMONG DOCUMENTS — S740

INPUT FIRST FEATURE VECTOR TO MACHINE
LEARNING-BASED NEURAL NETWORK MODEL WITH
PRE-TRAINED CORRELATION TO DERIVE CLASS
SPECIFYING INTERIOR STYLE FOR PREDETERMINED
FEATURE VECTOR AND DETERMINE STYLE OF FIRST USER — S750

WHEN FIRST USER REQUESTS INFORMATION FOR
PREDETERMINED OBJECT PROVIDED BY INTERIOR
SERVICE, RECOMMEND OBJECT INFORMATION MAPPED
TO METADATA OF STYLE BASED ON DETERMINED STYLE — S760

END

18

<table>
<tr><td colspan="2" align="center">**INTERNATIONAL SEARCH REPORT**</td><td>International application No.<br><br>**PCT/KR2022/000275**</td></tr>
</table>

| A. | CLASSIFICATION OF SUBJECT MATTER |
|---|---|

**G06Q 50/08**(2012.01)i; **G06F 40/205**(2020.01)i; **G06F 40/268**(2020.01)i; **G06Q 50/00**(2006.01)i; **G06Q 50/30**(2012.01)i; **G06F 17/16**(2006.01)i; **G06N 3/08**(2006.01)i

According to International Patent Classification (IPC) or to both national classification and IPC

| B. | FIELDS SEARCHED |
|---|---|

Minimum documentation searched (classification system followed by classification symbols)

G06Q 50/08(2012.01); G06F 17/00(2006.01); G06F 3/00(2006.01); G06N 3/02(2006.01); G06Q 30/02(2012.01); G06Q 30/06(2012.01); G06Q 30/08(2012.01); G06Q 50/10(2012.01); G06Q 50/30(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인테리어(interior), 스타일(style), 텍스트(text), 특징 벡터(feature vector), 신경망 모델(neural network model), 학습(learning)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2177336 B1 (DREAM INSIGHT et al.) 10 November 2020 (2020-11-10)<br>See claim 1. | 1-11 |
| Y | KR 10-2020-0023705 A (BEJEWEL INC) 06 March 2020 (2020-03-06)<br>See paragraphs [0054], [0058]-[0063], [0082]-[0094], [0127], [0147], [0155]-[0162] and [0169]-[0170] and claim 3. | 1-11 |
| Y | KR 10-2018-0121466 A (NAVER CORPORATION) 07 November 2018 (2018-11-07)<br>See paragraphs [0036], [0039] and [0047]. | 1-11 |
| Y | KR 10-2013-0009123 A (SAMSUNG ELECTRONICS CO., LTD.) 23 January 2013 (2013-01-23)<br>See paragraph [0060] and claims 7-8. | 6 |
| A | KR 10-2015-0002409 A (FOUNDATION OF SOONGSIL UNIVERSITY-INDUSTRY COOPERATION) 07 January 2015 (2015-01-07)<br>See entire document. | 1-11 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2022** | **26 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000275**

| Patent document cited in search report | | | Publication date (day/month/year) | Patent family member(s) | | | Publication date (day/month/year) |
|---|---|---|---|---|---|---|---|
| KR | 10-2177336 | B1 | 10 November 2020 | None | | | |
| KR | 10-2020-0023705 | A | 06 March 2020 | KR | 10-2153410 | B1 | 08 September 2020 |
| KR | 10-2018-0121466 | A | 07 November 2018 | JP | 2018-181326 | A | 15 November 2018 |
| | | | | JP | 6744353 | B2 | 19 August 2020 |
| KR | 10-2013-0009123 | A | 23 January 2013 | KR | 10-1830767 | B1 | 22 February 2018 |
| | | | | US | 2013-0018837 | A1 | 17 January 2013 |
| | | | | US | 8781991 | B2 | 15 July 2014 |
| KR | 10-2015-0002409 | A | 07 January 2015 | KR | 10-1542417 | B1 | 07 August 2015 |

Form PCT/ISA/210 (patent family annex) (July 2019)